# EUROPÄISCHE PATENTANMELDUNG

(11) **EP 4 667 514 A1**
(43) Veröffentlichungstag der Anmeldung: **24.12.2025**
(21) Anmeldenummer: 25181104.8
(22) Anmeldetag: 05.06.2025
(51) Int. Cl.: C08J 5/18, B32B 27/08

(54) **BESCHICHTETE, EINLAGIG EXTRUDIERTE BOPP-FOLIE**

(30) Priorität: 13.06.2024 DE 102024116608
(71) Anmelder: Brückner Maschinenbau GmbH, 83313 Siegsdorf (DE)
(72) Erfinder: LINDEMANN, Willi, 83435 Bad Reichenhall (DE); WOLF, Martin, 83278 Traunstein (DE); KÖRBER, Alois, Dr., 83242 Reit im Winkel (DE)
(74) Vertreter: Flach Bauer & Partner Patentanwälte mbB

(57) **Zusammenfassung**

Die vorliegende Erfindung betrifft eine beschichtete, biaxial orientierte Polypropylen-Folie 110, sowie einen Laminatwerkstoff 100 umfassend diese Polypropylen-Folie 110 und ein Verfahren zur Herstellung der Polypropylen-Folie 110. Die Polypropylen-Folie 110 ist eine einlagig extrudierte Polypropylen-Folie (BOPP-Folie), die eine extrudierte Polypropylen-Lage 112 sowie zumindest eine Beschichtung 114 aufweist. Die extrudierte Polypropylen-Lage 112 umfasst ein Homo-Polypropylen und ein Maleinsäureanhydrid funktionalisiertes Polypropylen. Die Beschichtung 114 ist eine Dispersionsbeschichtung, die Polyurethan umfasst.

## Beschreibung

### Gebiet der Erfindung

Die Erfindung betrifft eine beschichtete, einlagig extrudierte, BOPP-(Biaxial Orientierte Polypropylen)-Folie, ein Verfahren zur Herstellung dieser Polypropylen-Folie sowie einen Laminatwerkstoff, umfassend diese Polypropylen-Folie.

### Hintergrund

Ein aktueller Trend in der Kunststoff- und Verpackungsindustrie ist die Einsparung von Kunststoffen. Für nachhaltige Verpackungsmaterialien (Stichwort: "Sustainable Packaging") soll der Anteil der polymeren Bestandteile, in den Verpackungen, insbesondere Verpackungslaminaten, reduziert werden. Typische Verpackungslaminate umfassen neben Polymerfolien beispielsweise Papier-Substrate und/oder Metallschichten.

Eine Möglichkeit zur Reduktion der polymeren Bestandteile bietet die Reduktion der Polymerfoliendicke. Dies ist nicht nur wirtschaftlich sinnvoll, da weniger Rohstoffe eingesetzt werden müssen, sondern dient auch einem Umweltaspekt. Zudem kann das Recycling von Verpackungslaminaten, die einen geringen polymeren Anteil (beispielsweise < 5%) aufweisen vereinfacht werden, da geltende Fremdmaterialgrenzen unterschritten werden können. In diesem Fall kann eine Reduzierung der Foliendicke auch zu einer weiteren Reduktion der Gesamtdicke des Verpackungslaminats führen, sodass zusätzliche Rohstoffe, wie Papier-Substrat, eingespart werden können.

Wird beispielsweise eine 15 µm dicke Polymerfolie in einem Papier-Polymer-Verpackungslaminat eingesetzt, muss die Gesamtdicke des Verpackungslaminats mindestens 300 µm betragen, um unter eine 5% Fremdmaterialgrenze zu fallen. Jede Reduzierung der Polymerfoliendicke hat somit einen Einfluss auf die Gesamtdicke des Verpackungslaminats.

Zudem ist es oftmals erforderlich, um gewünschte Eigenschaften zu erzielen, dass mehrschichtig extrudierte Polymerfolien (Multilayer-Folien) eingesetzt werden. Die einzelnen Folienschichten (beispielsweise 3-7 Schichten) können sodann für unterschiedliche Eigenschaften optimiert werden. Beispielsweise können die folgenden Eigenschaften über entsprechende Folienschichten eingestellt werden:
- Antiblock-Wirkung (meist Außenlage)
- Siegeleigenschaften (meist Außenlage)
- Optische Eigenschaften, wie Farbe, Glanz, ...
- Mechanische Eigenschaften, wie Zugfestigkeit, Schrumpf, ... (primär durch Innenlagen bzw. Kernschicht)
- Haftungsverbesserung für die Weiterverarbeitung, Metallisierung, oder Laminierung (Außenlage(n))

Die gewünschte Antiblock-Wirkung wird üblicherweise durch die Zugabe eines AB-Masterbatch (AB=Antiblock) bzw. Antiblockmitteln in die entsprechende Folienschicht (meist Außenlagen) erreicht, wie beispielsweise aus der Patentanmeldung DE 10 2018 101 747 A1 bekannt ist. Die Antiblockmittel umfassen typischerweise u.a. Feststoffpartikel mit einer Größe im Mikrometer-Bereich (Partikeldurchmesser etwa 1µm bis 10 µm). Die Antiblock-Wirkung ermöglicht ein fehlerfreies und schnelles Auf- und Abwickeln der Folie. Allerdings können die AB-Masterbatches andere Eigenschaften der Folie, wie die Optik und/oder die Metallisierbarkeit beeinträchtigen.

Für die Bereitstellung ausreichender Barriere-Eigenschaften kann zudem notwendig sein, die Polymerfolien zu metallisieren. Hierzu wird der Außenlage typischerweise ein gut metallisierbares Copolymer beigemischt.

Die einzelnen Folienschichten sind typischerweise aus unterschiedlichen Kunststoffen gefertigt und können nicht voneinander getrennt werden. Hierdurch wird das Recycling erschwert oder gar unmöglich.

Dem Trend des Sustainable Packaging folgend, wurde versucht Papier-Substrate direkt zu metallisieren. Diese Versuche führten jedoch nicht zur gewünschten Barriere-Qualität. Zudem waren die erhaltenen Verpackungslaminate unwirtschaftlich.

Um dünne Folien herzustellen, ist es zudem aus dem Bereich der technischen BOPP-Folien (beispielsweise Kondensatorfolien oder Stromableiterfolien) bekannt, nach der Extrusion, insbesondere beim Verstrecken einlagiger Folien eine sogenannten Kristallitumwandlung des Polymers zu erzwingen. Diese Kristallitumwandlung wird durch die Verwendung sehr reiner und somit teurer Materialien und in Kombination mit einem langsamen Abkühlen der Schmelze nach der Extrusion erreicht.

Durch die Kristallitumwandlung bilden sich sogenannte "Lassos" in der Folie, die die Rauheit erhöhen, wodurch ein Verblocken der Folie vermieden werden kann. Das langsame Abkühlen führt aber zu langsamen und somit oft unwirtschaftlichen Produktionsgeschwindigkeiten. Zudem beinträchtigen die rauen Oberflächen die Optik und die Barrierewirkung der Folie.

Weiterhin dürfen die Rohstoffe für technischen BOPP Folien (BOPP-C), wie Kondensatorfolien, aufgrund der üblichen elektrischen Eigenschaftsprofile in der Regel keine oder kaum Phosphite enthalten. Sie sind also nur gering stabilisiert und können nur schlecht recycliert werden. BOPP-Rohstoffe, die für Packaging-Anwendungen eingesetzt werden, weisen in der Regel einen höheren Phosphite-Anteil auf. Dieser Phosphite-Anteil erlaubt ein gutes Recycling, insbesondere von Produktionsabfällen, wie Randstreifen, Folienabrissen, oder Verschnitt.

Zudem sind die BOPP-C-Rohstoffe sehr viel reiner und daher etwa 20-30% teurer als Packaging BOPP-Rohstoffe. Die BOPP-C-Rohstoffe werden mithin für Packaging-Anwendungen nicht genutzt.

### Beschreibung der Erfindung

Der Erfindung liegt die Aufgabe zugrunde, die vorgenannten Nachteile zumindest teilweise auszuräumen. Insbesondere soll eine sehr dünne Polymerfolie bereitgestellt werden, die eine gute optische Qualität und gute Barriereeigenschaften bzw. eine gute Metallisierbarkeit aufweist. Zudem soll ein Laminatwerkstoff bereitgestellt werden, der einen geringen Polymeranteil aufweist.

Diese Aufgabe wird durch eine erfindungsgemäße Polymerfolie, ein Herstellungsverfahren und durch einen erfindungsgemäßen Laminatwerkstoff gelöst. Weitere Aspekte der Erfindung sind in den abhängigen Ansprüchen sowie in der nachfolgenden Beschreibung aufgeführt.

Insbesondere wird die Aufgabe durch eine beschichtete, biaxial orientierte Polypropylen-Folie (BOPP-Folie) gelöst. Die Polypropylen-Folie ist eine einlagig extrudierte Polypropylen-Folie, die eine extrudierte Polypropylen-Lage sowie zumindest eine Beschichtung aufweist. Die extrudierte Polypropylen-Lage umfasst ein Homo-Polypropylen und ein Maleinsäureanhydrid funktionalisiertes Polypropylen. Die Beschichtung ist eine Dispersionsbeschichtung, die Polyurethan umfasst.

Polypropylen (Kurzzeichen PP) ist ein teilkristalliner unpolarer Thermoplast und gehört zu der Gruppe der Polyolefine. Polypropylen wird durch Polymerisation des Monomers Propylen gewonnen. Polypropylen-Homopolymer (auch: Homo-Polypropylen, PPH), ist ein Polypropylen, das durch die Polymerisation von reinem Propylen gewonnen wird. Beispielsweise wird Homo-Polypropylen unter dem Handelsnamen Moplen HP 525J oder Adstif HA622H der Firma LyondellBasell vertrieben. Moplen HP 525J hat eine Schmelze-Massefließrate (MFR) von etwa 3,0 g/10min und Adstif HA622H hat beispielsweise eine Schmelze-Massefließrate (MFR) von etwa 2,0 g/10min.

In einem weiteren Aspekt kann das Polypropylen-Homopolymer ein isotaktisches Homo-Polypropylen sein, das einen hohen Grad an Isotaktizität aufweist, beispielsweise kann die Isotaktizität des verwendeten Homo-Polypropylens in einem Bereich von mehr als 70 %, oder in einem Bereich von mehr als 85 % oder in einem Bereich von 92 bis 96 % liegen.

Maleinsäureanhydrid funktionalisiertes Polypropylen (PP-g-MAH) ist eine Form von modifiziertem Polypropylen, das durch die chemische Anbindung von Maleinsäureanhydrid (MAH) an die Polypropylenkette entsteht. Diese Funktionalisierung verändert die Oberflächeneigenschaften des Polypropylens. Insbesondere wird die Kompatibilität mit polaren Materialien verbessert. Beispielsweise wird Maleinsäureanhydrid funktionalisiertes Polypropylen unter dem Handelsnamen ADMER^{™} (insbesondere ADMER^{™} AT1179E, ADMER^{™} AT3355E, ADMER^{™} RA206E, ADMER^{™} AT3177E, AD-MER^{™} QF500E, oder andere) der Firma Mitsui Chemicals vertrieben, wobei sich ADMER^{™} AT1179E als besonders geeignet gezeigt hat. Weitere Maleinsäureanhydrid funktionalisierte Polypropylen-Materialien werden unter den Handelsnamen Modic^{®} (Mitsubishi Chemicals), Plexar^{®} (Chemplex), Epilene^{®} (Eastman) oder Bynel^{®} (DOW) vertrieben.

Die Mischung aus Homo-Polypropylen und Maleinsäureanhydrid funktionalisiertem Polypropylen führt überraschenderweise zu einer guten Anhaftung der Beschichtung, sodass keine weiteren Haftvermittler zwischen der extrudierten Polypropylen-Lage und der Beschichtung nötig sind. Die gute Anhaftung ist auf die polaren Anteile in der einlagig extrudierten Polypropylen-Lage (Monolage) zurückzuführen.

Ist die Polypropylen-Lage nur einseitig beschichtet, kann auf der zweiten, der Beschichtung gegenüberliegenden Seite der Polypropylen-Lage durch die polaren Anteile die Bedruckbarkeit verbessert werden. Zudem zeigt sich, dass auch die Anhaftung der Polypropylen-Folie auf einer Tragschicht (beispielsweise eines Laminatwerkstoffs) verbessert werden kann.

Die Beschichtung, welche Polyurethan umfasst, führt überdies zur Verbesserung der Barriereeigenschaften. Weiterhin hat sich gezeigt, dass durch die Beschichtung auch die Metallisierbarkeit der Polypropylen-Folie verbessert wird. Dies ermöglicht es, eine (einseitig oder beidseitig) metallisierte Folie, beispielsweise als Verpackungsmaterial (insbesondere als Teil eines Laminatwerkstoffs mit guten Barriereeigenschaften und/oder guten optischen Eigenschaften (Glanz)), als Kondensatorfolie (z.B. in einem Wickelkondensator), oder als Stromableiterfolie (z.B. in einer Batterie) einzusetzen.

Da die Beschichtung eine Dispersionsbeschichtung ist, also nicht extrudiert wurde, lassen sich sehr dünne Beschichtungsdicken erreichen. In einem Aspekt weist die Beschichtung eine Dicke im Bereich von 50 nm bis 150 nm, oder im Bereich von 80 nm bis 120 nm, oder im Bereich von 90 nm bis 110 nm auf. Die Beschichtung hat somit nur einen geringen Anteil an der Gesamtdicke der Polypropylen-Folie, die beispielsweise im Bereich von 2 µm bis 10 µm, oder im Bereich von 3 µm bis 7 µm, oder im Bereich von 4 µm bis 6 µm liegt. Derart dünne Folien erlauben es Polymer einzusparen und erhöhen zugleich die Recyclierbarkeit von Laminatwerkstoffen, wie eingangs erläutert wurde.

Die Beschichtung kann beispielsweise als wasserbasierte Polyurethandispersion aufgetragen werden, welche zum Beispiel das unter dem Handelsnamen TAKELAC^{™} WPB-341 (von Mitsui Chemicals) dispergierte Polyurethan enthält.

In einem weiteren Aspekt umfasst die Beschichtung Nanopartikel. Beispielsweise kann die Beschichtung 2 Gew.% bis 20 Gew.%, oder 4% Gew.% bis 15 Gew.%, oder 5 Gew.% bis 10 Gew.% Nanopartikel umfassen. Die Nanopartikel können beispielsweise SiO₂-Nanopartikel (z.B. erhältlich unter dem Handelsnamen Levasil^{®} CT4 PL), TiO₂-Nanopartikel, Al₂O₃-Nanopartikel, Fe₂O₃-Nanopartikel, Fe₃O₄-Nanopartikel ZnO-Nanopartikel, und/oder dergleichen umfassen.

Die Nanopartikel können weiterhin einen mittleren Partikeldurchmesser (Äquivalenter Siebdurchmesser) im Bereich von 20 nm bis 150 nm, oder im Bereich von 50 nm bis 120 nm oder im Bereich von 80 nm bis 100 nm aufweisen können. Es zeigt sich, dass diese Partikelgröße zu einer Oberfläche führt, deren Rauheit rau genug ist, um ein Verblocken der Polypropylen-Folie beim Auf- und Abwickeln effektiv zu verhindern. Insbesondere hat sich gezeigt, dass ein Reibungskoeffizient (COF-Wert (µs), ISO 8295) der hergestellten Folie mit COF ≤ 1 ein Auf- und Abwickeln der Folie ohne Verblocken ermöglicht. Insbesondere kann beim Aufwickeln der Polypropylen-Folie eine geringe Luftmenge zwischen die einzelnen Wickellagen gelangen und dort gehalten werden, sodass anschließend ein fehlerfreies Abwickeln der Polypropylen-Folie möglich ist. Auf Antiblock-Masterbatches kann mithin verzichtet werden. Insbesondere ist die Polypropylen-Folie frei von Antiblock-Masterbatches und insbesondere von Antiblock-Partikeln, deren Durchmesser im Größenbereich der Foliendicke liegt.

Der Verzicht auf Antiblock-Masterbatches bringt den Vorteil mit sich, dass die Nanopartikel kleiner gewählt sein können (Partikelgröße, wie oben angegeben), als die bei der Co-Extrusion von Antiblock-Masterbatches typischerweise eingesetzten Antiblock-Partikel. Dies ist möglich, da die Beschichtung der Folie deutlich dünner ist als gewöhnliche co-extrudierte Skinlayers.

Zudem ist die Rauheit gering genug, um eine optisch wertige Polypropylen-Folie (mit sehr geringen Haze-Werten), und/oder gute Barriereeigenschaften (auch in Kombination mit einer Metallisierung) zu erhalten. Auch die Metallisierbarkeit und die Qualität einer Metallisierung kann durch die Beschichtung, insbesondere durch die Verwendung von Nanopartikeln im Gegensatz zu co-extrudierten Antiblock-Partikeln, verbessert werden.

Zudem hat sich gezeigt, dass die Nanopartikel (im Gegensatz zu Antiblockmitteln, bzw. -partikeln) die metallisierte Polypropylen-Folie beim Auf- und Abwickeln nicht schädigen. Insbesondere kann das Auftreten von Pinnholes vermieden werden, die entstehen können, wenn sich die relativ großen Feststoffpartikel bekannter Antiblockmittel beim Aufwickeln der Folie in eine Metalllage drücken.

In einem weiteren Aspekt besteht die extrudierte Polypropylen-Lage (Monolage) aus Homo-Polypropylen und aus Maleinsäureanhydrid funktionalisiertem Polypropylen.

Der Anteil an Maleinsäureanhydrid funktionalisiertem Polypropylen in der extrudierten Polypropylen-Lage kann zumindest 10 Gew.%, oder zumindest 15 Gew.%, oder zumindest 20 Gew.% betragen. Weiterhin kann der Anteil an Maleinsäureanhydrid funktionalisiertem Polypropylen in der extrudierten Polypropylen-Lage höchstens 35 Gew.%, oder höchstens 30 Gew.%, oder höchstens 25 Gew.% betragen.

Es hat sich gezeigt, dass die Kombination aus Maleinsäureanhydrid funktionalisiertem Polypropylen und Homo-Polypropylen hohe Produktionsgeschwindigkeiten auch bei der Herstellung einer einlagig extrudierten Polypropylen-Lage (Monolage) erlaubt. Ein langsames Abkühlen der extrudierten Schmelze - wie bei der Herstellung von Folien mit Kristallitumwandlung - ist nicht nötig. Somit kann die Polypropylen-Folie, trotz hoher Produktionsgeschwindigkeiten, eine Dicke im Bereich von 2 µm bis 10 µm, oder im Bereich von 3 µm bis 7 µm, oder im Bereich von 4 µm bis 6 µm aufweisen. Zudem kann die Polypropylen-Folie eine Dichte im Bereich von 0,9 g/cm³ bis 0,95 g/cm³, insbesondere im Bereich von 0,91 g/cm³ bis 0,93 g/cm³ aufweisen

Weiterhin zeigt sich, dass die Polypropylen-Folie mit sehr geringen Dickenabweichungen produziert werden kann. Mithin können Kondensatorfolien, Stromableiterfolien und/oder Verpackungsfolien (bzw. -laminate) hergestellt werden. Die Dicke der Polypropylen-Folie kann (über eine Produktionslänge von 100 m) beispielsweise in einem Toleranzbereich von Soll-Foliendicke ± 0,4 µm, oder in einem Toleranzbereich von Soll-Foliendicke ± 0,25 µm, oder Toleranzbereich von Soll-Foliendicke ± 0,12 µm liegen.

Weiterhin kann die Beschichtung auf einer wässrigen oder einer im Wesentlichen wässrigen Dispersionsbeschichtung basieren. Eine im Wesentlichen wässrige Dispersionsbeschichtung kann (bei Auftrag) einen Lösemittelanteil von max. 5 Vol.% aufweisen.

Wässrige oder im Wesentlichen wässrigen Dispersionsbeschichtung erlauben die Einsparung von Lösungsmittel und verbessern den Explosionsschutz. Beispielsweise kann die Beschichtung TAKELAC^{™} WPB-341 (PU) von Mitsui Chemical umfassen.

In einem weiteren Aspekt kann über der Beschichtung (insbesondere in unmittelbarem Kontakt zur Beschichtung) eine Metallisierungslage angeordnet sein. Die Metallisierung kann, wie auch die Beschichtung, einseitig oder beidseitig auf der Polypropylen-Folie angeordnet sein.

Die Metallisierungslage kann Aluminium, Zink, Titan, Gold, Silber, Silizium, Kupfer, Chrom, und/oder andere Metalle sowie deren Legierungen umfassen oder aus diesen bestehen. Ebenso kann die Metallisierungslage Oxide der vorgenannten Materialien, insbesondere Aluminiumoxide (AlOₓ) und/oder Siliziumoxide (SiOₓ), umfassen, oder aus diesen bestehen. Insbesondere kann die Metallisierungslage mehrere (unterschiedliche) Metallisierungsschichten umfassen. Für Verpackungen zeigt sich, dass mit Aluminium bzw. Aluminiumlegierungen gute Barriereeigenschaften erzielt werden können. Insbesondere kann so eine gute Wasserdampfbarriere erreicht werden.

In einer beispielhaften Polypropylen-Folie ist die Beschichtung auf einer ersten Seite der Polypropylen-Lage angeordnet. Die zweite, gegenüberliegende Seite der Polypropylen-Lage ist nicht beschichtet aber oberflächenbehandelt. Die Oberflächenbehandlung kann beispielsweise eine Corona- und/oder Plasma-Oberflächenbehandlung sein. Hierdurch kann die Anhaftung der Polypropylen-Folie auf Tragschichten (z.B. einem Papiersubstrat) verbessert werden. Ebenso kann die Bedruckbarkeit verbessert werden. Ebenso ist es möglich die Oberfläche der Polypropylen-Folie vor dem Beschichten zu behandeln (z.B. mit Plasma oder Corona).

Die Aufgabe wird weiterhin durch einen Laminatwerkstoff, insbesondere einen Lebensmittelverpackungslaminatwerkstoff gelöst. Der Laminatwerkstoff umfasst zumindest eine Polypropylen-Folie der oben beschriebenen Art sowie eine Tragschicht, wobei die Polypropylen-Folie (unmittelbar) auf der Tragschicht angeordnet, insbesondere aufkaschiert, ist. Die Tragschicht kann ein Papiersubstrat umfassen, oder aus Papiersubstrat bestehen.

Ist auf der Polypropylen-Folie eine Metallisierungslage angeordnet, kann die Metallisierungslage in Richtung der Tragschicht weisen (die Metallisierungslage ist zwischen der Beschichtung und der Tragschicht angeordnet). Alternativ kann die Polypropylen-Folie so auf der Tragschicht angeordnet sein, dass die Metallisierungslage nach außen weist.

Um die Recyclierbarkeit zu verbessern, kann der Anteil der Polypropylen-Folie am Laminatwerkstoff höchstens 5 Gew.%, oder höchstens 4 Gew.%, oder höchstens 3 Gew.% betragen. Der geringe Polymeranteil schont zudem Ressourcen.

Die Aufgabe wird weiterhin durch ein Verfahren zur Herstellung einer einlagigen extrudierten Polypropylen-Folie der oben beschriebenen Art gelöst. Das Verfahren umfasst die folgenden Schritte:
- Extrudieren einer Polypropylen-Lage (Monolage), wobei die extrudierte Polypropylen-Lage ein Homo-Polypropylen und ein Maleinsäureanhydrid funktionalisiertes Polypropylen umfasst;
- Beschichten, insbesondere Inline-Beschichten, der extrudiert Polypropylen-Lage mit einer Beschichtung, wobei die Beschichtung als wässrige Dispersion aufgetragen wird und Polyurethan sowie optional Nanopartikel umfasst, und
- Verstrecken der Polypropylen-Lage. Das Verstrecken kann ein Längsverstrecken (mittels einer MDO-Vorrichtung, Machine Direction Orientation) und/oder ein Querverstrecken (mittels einer TDO-Vorrichtung, Transverse Direction Orientation) der Polypropylen-Lage umfassen.

Zudem kann das Verstrecken in Längs- und Querrichtung simultan oder sequentiell erfolgen.

Die Beschichtung kann nach dem Verstrecken in Längs- und Querrichtung, d.h. auf die bereits biaxial orientierte Polymerfolie aufgetragen werden. Ebenso ist es möglich die Beschichtung vor dem Verstrecken aufzutragen.

Weiterhin ist es möglich, die Polymerfolie zunächst in einer Richtung (z.B. in Längsrichtung, in einer MDO-Vorrichtung) zu verstrecken. Anschließend kann die Beschichtung auf die in einer Richtung (z.B. in Längsrichtung) verstreckte Polymerfolie aufgetragen werden. Diese beschichtete Polymerfolie kann sodann in der zweiten Richtung (z.B. der Querrichtung, in einer TDO-Vorrichtung) verstreckt werden. Beispielsweise kann die Polymerfolie zunächst in Längsrichtung verstreckt, dann beschichtet und anschließend in Querrichtung verstreckt werden.

Ein Verstrecken kann also vor und/oder nach dem Beschichten erfolgen.

Die Extrusion erfolgt typischerweise über eine Breitschlitzdüse auf eine sogenannte Kühlwalze (Chill-Roll). Die extrudierte Kunststoffschmelze bzw. die extrudierte Polypropylen-Lage kann vor dem Verstrecken über eine Kühlwalze geführt werden. Die Kühlwalze ist typischerweise aus einem Wärme leitenden Material gefertigt und durch eine interne Kühlung (oft mit Wasser oder einem anderen Kühlmittel) auf einer niedrigen Temperatur gehalten. Die Temperatur der Kühlwalze kann beispielsweise in einem Bereich von 35°C bis 45°C, oder in einem Bereich von 38°C bis 42°C liegen. Durch den Kontakt mit der gekühlten Oberfläche der Walze beginnt die Kunststoffschmelze schnell zu erstarren und verfestigt sich zu einer festen Bahn.

Um das Abkühlen der Schmelze weiter zu beschleunigen kann die Kunststoffschmelze optional durch ein Wasserbad geführt werden, wobei das Wasserbad eine Temperatur im Bereich von 20°C bis 35°C, oder im Bereich von 22°C bis 28°C aufweisen kann. Somit können hohe Produktionsgeschwindigkeiten erreicht werden. Der Einsatz eines Wasserbades ist für die Herstellung von PP-Folien bzw. beschichteten PP-Folien nicht zwingend. Es hat sich aber gezeigt, dass ein Wasserbad zu einer schnelleren und homogeneren Abkühlung führen kann.

Die Beschichtung kann durch Walzenauftrag, Spray-Coating, Curtain-Coating und/oder dergleichen erfolgen. Insbesondere kann die Beschichtung Inline, also in einer Reckanlage, in der auch das Verstrecken ausgeführt wird, erfolgen. In einem Aspekt erfolgt das Beschichten durch ein Reverse Kiss Coating Verfahren. Dabei wird die extrudierte (und verstreckte) Polypropylen-Lage mittels Führungsrollen über eine Beschichtungswalze geführt, die sich entgegen der Bewegungsrichtung der Polypropylen-Lage dreht. Die Beschichtungswalze ist zudem mit der wässrigen Dispersion beladen und überträgt die Dispersion auf die Polypropylen-Lage. Hierdurch kann ein besonders gleichmäßiger Auftrag der flüssigen Dispersion bei sehr hohen Verarbeitungsgeschwindigkeiten erreicht werden.

Der Feststoffanteil (PU-Partikel, optional Nanopartikel und/oder weitere) der flüssigen Dispersion kann 5 Gew.% bis 20 Gew.%, oder 10 Gew.% bis 15 Gew.% betragen (bezogen auf die Gesamtmasse der flüssigen Dispersion). Die durch die flüssige Dispersion gebildete Nassschicht hat beispielsweise eine Flächenmasse von 3 g/m² bis 20 g/m² oder von 6 g/m² bis 10 g/m². Um die Benetzung der Polypropylen-Lage mit der Dispersion zu verbessern, kann die Polypropylen-Lage mit einem Benetzungsmittel vorbehandelt werden und/oder das Benetzungsmittel kann der wässrigen Dispersion beigemischt sein (Anteil <0.5 Gew.%, oder <0.3 Gew.%). Ein mögliches Benetzungsmittel ist ein ethoxyliertes Acetylen-Tensid, wie es beispielsweise unter dem Handelsnamen Surfynol^{®} 440 der Firma Evonik erhältlich ist.

Weiterhin kann das Längsverstrecken (z.B. in einer MDO-Vorrichtung) bei einer Temperatur im Bereich von 90°C bis 120 °C, oder im Bereich von 95°C bis 112 °C erfolgen. Das Streckverhältnis kann hierbei im Bereich von 4 bis 6, oder im Bereich von 4,5 bis 5 liegen. Das Querverstrecken (z.B. in einer TDO-Vorrichtung) kann bei einer Temperatur im Bereich von 140°C bis 190 °C, oder im Bereich von 150°C bis 185 °C erfolgen. Das Streckverhältnis beim Querverstrecken kann im Bereich von 4 bis 10, oder im Bereich von 5 bis 9, oder in einem Bereich von 6 bis 9 liegen.

Die hergestellte Polypropylen-Folie ist typischerweise eine biaxial orientierte Polypropylen-Folie. Die Anlagengeschwindigkeit (Produktionsgeschwindigkeit nach dem Verstrecken) der Polypropylen-Folie kann beispielsweise im Bereich von 40 m/min bis 55 m/min, oder im Bereich von 45 m/min bis 50 m/min liegen (für Testanlagen). Die Anlagengeschwindigkeit in der industriellen Produktion kann zumindest 300 m/min, oder zumindest 400 m/min, oder zumindest 500 m/min, oder zumindest 600 m/min, oder zumindest 700 m/min, oder zumindest 800 m/min betragen.

Das Beschichten kann beispielsweise nur einseitig auf der Polypropylen-Lage erfolgen, oder beidseitig. Weiterhin kann das Verfahren ein Oberflächenbehandeln der der Beschichtung gegenüberliegende Seite der Polypropylen-Lage umfassen, wobei das Oberflächenbehandeln insbesondere eine Coronabehandlung und/oder Plasmabehandlung umfasst. Hierdurch kann die Anhaftung der Polypropylen-Folie auf Tragschichten (z.B. einem Papiersubstrat) verbessert werden. Ebenso kann die Bedruckbarkeit und/oder die Metallisierbarkeit verbessert werden.

Das Verfahren kann zudem die folgenden Schritte umfassen:
- Metallisieren der Beschichtung, um eine Metallisierungslage auf der Beschichtung anzuordnen, wobei die Metallisierungslage Aluminium, Silizium, Kupfer, Zink, Titan, Gold, Silber, Chrom sowie Legierungen und/oder Oxide der vorgenannten Materialien umfassen kann, und/oder
- Kaschieren der Polypropylen-Folie auf eine Tragschicht (um einen Laminatwerkstoff zu erhalten), wobei die Tragschicht ein Papiersubstrat umfassen, oder ein Papiersubstrat umfassen kann.

### Kurze Beschreibung der Figuren

Die Erfindung wird nachfolgend anhand der beigefügten Figuren beispielhaft näher erläutert. Es zeigt
- Figur 1: einen schematischen Aufbau einer erfindungsgemäßen Polypropylen-Folie;
- Figur 2: einen schematischen Aufbau eines erfindungsgemäßen Laminatwerkstoffs, und
- Figur 3: einen schematischen Ablauf eines Herstellungsverfahrens.

### Beschreibung der Figuren

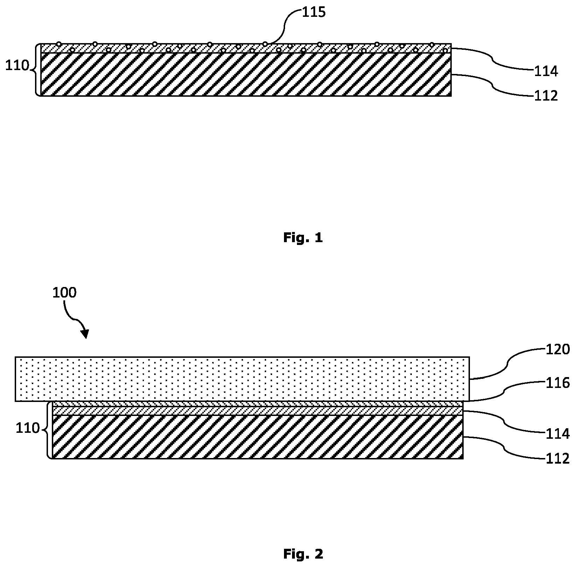

Figur 1 zeigt einen schematischen Aufbau einer erfindungsgemäßen Polypropylen-Folie 110. Die Dicke der Polypropylen-Folie 110, der Polypropylen-Lage 112 und der Beschichtung 114 sowie die Größe der Nanopartikel 115 ist nicht maßstabsgetreu wiedergegeben.

Die Polypropylen-Folie 110 ist biaxial orientiert und umfasst eine einlagig extrudierte Polypropylen-Lage 112 sowie zumindest eine Beschichtung 114. Die Beschichtung 114 ist im gezeigten Beispiel unmittelbar auf der extrudierten Polypropylen-Lage 112 angeordnet.

Die Polypropylen-Lage 112 umfasst ein Homo-Polypropylen und ein Maleinsäureanhydrid funktionalisiertes Polypropylen. Das Homo-Polypropylen und das Maleinsäureanhydrid funktionalisierte Polypropylen sind beispielsweise als Blend (Mischung) extrudiert worden, wobei der Anteil des Maleinsäureanhydrid funktionalisierten Polypropylens zumindest 10 Gew.%, oder zumindest 15 Gew.%, oder zumindest 20 Gew.% betragen kann.

Die Beschichtung 114 ist eine Dispersionsbeschichtung, die als wässrige Dispersion auf die extrudierte Polypropylen-Lage 112 aufgetragen wurde. Die hier gezeigte Beschichtung 114 umfasst neben Polyurethan (PU) auch Nanopartikel 115 (beispielsweise SiO₂-Nanopartikel). Die getrocknete Beschichtung 114 weist eine Dicke im Bereich von 50 nm bis 200 nm, oder im Bereich von 80 nm bis 180 nm, oder im Bereich von 100 nm bis 150 nm auf. Die Nanopartikel 115 weisen beispielsweise einen mittleren Partikeldurchmesser im Bereich von 20 nm bis 150 nm, oder im Bereich von 50 nm bis 120 nm oder im Bereich von 80 nm bis 100 nm. Die Nanopartikel führen zu einer Rauheit der Polypropylen-Folie 110, die ein Verblocken der Polypropylen-Folie 110 beim Auf- und Abwickeln verhindert. Der Einsatz von AB-Masterbatches in bzw. auf der Polypropylen-Folie 110 ist nicht erforderlich.

Die hier dargestellte Polypropylen-Folie 110 kann eine Dicke im Bereich von 2 µm bis 10 µm, oder im Bereich von 3 µm bis 7 µm, oder im Bereich von 4 µm bis 6 µm aufweisen. Dünne Polypropylen-Folien mit einer Dicke im Bereich von 2 µm bis 6µm sind besonders bevorzugt.

Wie in Figur 2 gezeigt ist, kann über der Beschichtung 114 der Polypropylen-Folie 110 eine Metallisierungslage 116 angeordnet sein. Die Metallisierungslage 116 kann Aluminium, Silizium, Kupfer, Zink, Titan, Gold, Silber sowie Legierungen der vorgenannten Materialien umfassen. Ebenso kann die Metallisierungslage Oxide, insbesondere Aluminiumoxide (AlOₓ) und/oder Siliziumoxide (SiOₓ) umfassen. Insbesondere für Verpackungsanwendung, z.B. als Wasserdampfbarriere, eigenen sich insbesondere Aluminium- bzw. Aluminiumlegierungs-Metalllagen. Für die Anwendung als Kondensatorfolie können insbesondere Aluminium-Zink-Legierungen eingesetzt werden.

Zudem kann die Polypropylen-Folie 110 (in metallisierter Form oder nichtmetallisierter Form) auf eine Tragschicht 120 aufgebracht werden, um einen Laminatwerkstoff 100 zu erhalten.

Die Polypropylen-Folie 110 kann dabei so zur Tragschicht 120 orientiert sein, dass die Metallisierungslage 116 in Richtung der Tragschicht 120 weist (wie dargestellt). In diesem Fall ist die Metallisierungslage 116 zwischen der Beschichtung 114 und der Tragschicht 120 angeordnet. Alternativ (nicht gezeigt), kann die Metallisierungslage 116 von der Tragschicht wegweisen. Ist die Polypropylen-Folie 110 nicht metallisiert kann die Beschichtung 114 zur Tragschicht weisen, oder von dieser weg zeigen.

Wird die Polypropylen-Folie 110 ohne die Metallisierungslage 116 auf eine Tragschicht 120 aufgebracht, oder weist die Metallisierungslage 116 von der Tragschicht 120 weg, kann die Seite der Polypropylen-Folie 110, welche zur Tragschicht 120 weist (und nicht beschichtet ist), oberflächenbehandelt sein (insbesondere mit Corona oder Plasma). Die Oberflächenbehandlung kann die Anhaftung der Polypropylen-Folie 110 auf der Tragschicht 120, beispielsweise ein Papiersubstrat, verbessern.

Im gezeigten Beispiel kann die Polypropylen-Folie 110 eine Dicke im Bereich von 2 bis 10 µm, insbesondere im Bereich von 2 µm bis 6 µm aufweisen und die Tragschicht 120 kann eine Mindestdicke im Bereich von 40 µm bis 200 µm, insbesondere im Bereich von 40 µm bis 120 µm aufweisen.

Das Verhältnis der Dicke der Polypropylen-Folie 110 zur Mindestdicke der Tragschicht 120 kann dabei so gewählt sein, dass der Anteil der Polypropylen-Folie 110 am Laminatwerkstoff 100 höchstens 5 Gew.%, oder höchstens 4 Gew.%, oder höchstens 3 Gew.% beträgt.

Die Figuren 1 und 2 zeigen hier jeweils einseitig beschichtete bzw. einseitig metallisierte Polypropylen-Lagen 112. Es versteht sich, dass auch Polypropylen-Folien 110 erhalten werden können, deren Polypropylen-Lage 112 beidseitig beschichtet und optional auch beidseitig metallisiert ist.

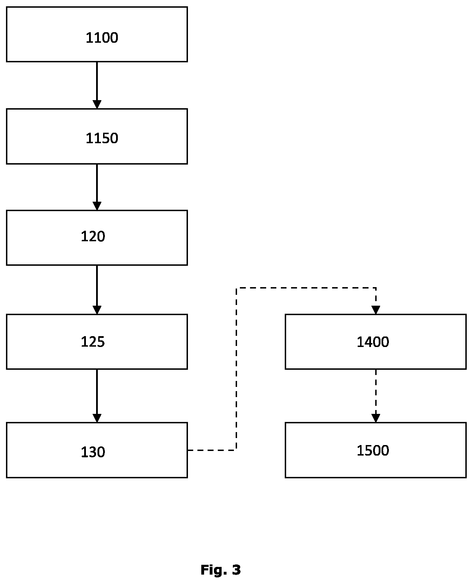

Figur 3 zeigt einen schematischen Ablauf eines Herstellungsverfahrens 1000 einer einlagigen extrudierten Polypropylen-Folie 110 bzw. eines Laminatwerkstoffs 100, wie diese in den Figuren 1 und 2 dargestellt sind.

Das Verfahren 1000 umfasst das Extrudieren 1100 einer Polypropylen-Lage 112 (Monolage). Die extrudiert Polypropylen-Lage 112 umfasst ein Homo-Polypropylen und ein Maleinsäureanhydrid funktionalisiertes Polypropylen, wobei diese vorzugsweise als Blend extrudiert werden.

Nach dem Extrudieren 1100 kann die Polypropylen-Lage 112 verstreckt werden (Schritt 1150). Das Verstrecken 1150 kann beispielsweise ein Verstrecken in Längsrichtung (z.B. in einer MDO-Vorrichtung) umfassen.

Nach dem Verstrecken 1150 in Längsrichtung wird die Polypropylen-Lage 112 in Schritt 1200 mit einer wässrigen Dispersion, welche Polyurethan und optional Nanopartikel umfasst, beschichtet. Das Beschichten 1200 erfolgt insbesondere Inline (z.B. via Reverse Kiss Coating). Die Polypropylen-Lage 112 kann nach dem Beschichten 1200 optional noch in Querrichtung verstreckt werden (Schritt 1250). Nach dem Trocken der wässrigen Dispersion liegt dann die Beschichtung 114 auf einer biaxial-orientierten Polymerfolie vor (s. Fig. 1).

Alternativ kann die Beschichtung vor dem Verstrecken oder nach dem Verstrecken aufgetragen werden. Insbesondere kann die Beschichtung vor einem simultanen Verstrecken in Längs- und Querrichtung aufgetragen werden.

In einem weiteren Schritt 1400 kann die Beschichtung 114 metallisiert werden, um die Metalllage 116 zu erzeugen. Zudem kann die Polypropylen-Folie 110 auf eine Tragschicht aufkaschiert werden (Schritt 1500), um einen Laminatwerkstoff zu erhalten.

### Beispiele

### Beispiel #1

Zur Herstellung einer erfindungsgemäßen Folie (Beispiel #1) wurde ein Blend aus einem Homo-Polypropylen (hier: Moplen HP 525J) und einem Maleinsäureanhydrid funktionalisiertem Polypropylen (hier: ADMER^{™} AT1179E) einlagig extrudiert. Der Anteil das Homo-Polypropylen betrug etwa 90 Gew.% und der Anteil des Maleinsäureanhydrid funktionalisiertem Polypropylen etwa 10 Gew.%.

Die Extrusion erfolgte über eine Breitschlitzdüse auf eine Kühlwalze (Chill-Roll). Die Temperatur des eingesetzten Doppelschneckenextruders lag im Bereich von 240°C bis 260°C, die der Kühlwalze bei etwa 40°C. Zum weiteren Abkühlen wurde die extrudierte Kunststoffschmelze durch ein Wasserbad geleitet, dessen Temperatur im Bereich von 28°C bis 32 °C lag.

Anschließend erfolgte eine Längs- und Querverstreckung mit einem Längsreckverhältnis im Bereich von 4-5. Die Anlagengeschwindigkeit bei der Produktion der biaxial-orientierten Polypropylen-Folie auf einer Testanlage lag im Bereich von 45 m/min bis 50 m/min. Es ergab sich eine Dicke der Polypropylen-Folie von 6,1 µm (Abweichung ± 0,16 µm).

Die übliche Skalierung der Anlagengeschwindigkeit von der Testanlage zur industriellen Produktion erlaubt eine Anlagengeschwindigkeit in der industriellen Produktion von zumindest 300 m/min, oder zumindest 400 m/min, oder zumindest 500 m/min, oder zumindest 600 m/min, oder zumindest 700 m/min, oder zumindest 800 m/min. Der Skalierungsfaktor (Anlagengeschwindigkeit_{industriell}/Anlagengeschwindigkeit_{Testanlage}) beträgt regelmä-βig 5 bis 20.

Die Beschichtung wurde auf die längsverstreckte Polypropylen-Lage (also vor der Querverstreckung) als Dispersion im Reverse Kiss Coating Verfahren inline aufgetragen. Die Dispersion umfasste die Polyurethan-Dispersion TAKELAC^{™} WPB-341 von Mitsui Chemicals sowie Nanopartikel (Nouryon CT4-PL (5 Gew.% in der Dispersion)).

Vor der Beschichtung wurde die Polypropylen-Lage Corona-behandelt. Der Feststoffanteil in der PU-Dispersion betrug 10-15%. Dies resultierte in einer Trockenschichtdicke der Beschichtung im Bereich von 100 nm bis 150 nm.

Die erhaltene Polypropylen-Folie zeichnete sich durch gute optische Eigenschaften (Haze-Wert: 0,86; nach ASTM D 1003), sowie durch gute Reibungseigenschaften (COF-Wert: 0,67; nach DIN EN ISO 8295) aus, sodass ein Verblocken vermieden werden konnte. Zudem konnte eine gute Anhaftung der Beschichtung auf der Polypropylen-Lage erzielt werden (sog. Tape-Test bestanden)

### Beispiel #2

Zur Herstellung einer erfindungsgemäßen Folie (Beispiel #2) wurde ebenfalls ein Blend aus einem Homo-Polypropylen (hier: Adstif HA 622 H) und einem Maleinsäureanhydrid funktionalisiertem Polypropylen (hier: AD-MER^{™}AT1179E) einlagig extrudiert. Der Anteil des Homo-Polypropylen betrug etwa 80 Gew.% und der Anteil des Maleinsäureanhydrid funktionalisiertem Polypropylen etwa 20 Gew.%.

Die Extrusion erfolgte über eine Breitschlitzdüse auf eine Kühlwalze (Chill-Roll). Die Temperatur des eingesetzten Doppelschneckenextruders lag im Bereich von 240°C bis 260°C, die der Kühlwalze bei etwa 40°C. Zum weiteren Abkühlen wurde die extrudierte Kunststoffschmelze durch ein Wasserbad geleitet, dessen Temperatur im Bereich von 25°C bis 30 °C lag. Anschließend erfolgte eine Längs- und Querverstreckung mit einem Längsreckverhältnis im Bereich von 4-5. Die Anlagengeschwindigkeit bei der Herstellung der biaxial-orientierten Polypropylen-Folie lag im Bereich von 50 m/min. Es ergab sich eine Dicke der Polypropylen-Folie von 4,0 µm (Abweichung ± 0,10 µm).

Die Beschichtung erfolgte wie bei Beispiel #1 angegeben.

Die erhaltene Polypropylen-Folie zeichnete sich durch gute optische Eigenschaften (Haze-Wert: 0,90; nach ASTM D 1003), sowie durch gute Reibungseigenschaften (COF-Wert: 0,95; nach DIN EN ISO 8295) aus, sodass ein Verblocken vermieden werden konnte.

Die nachstehende Tabelle gibt eine Übersicht der erfindungsgemäßen Beispiele (#1 und #2) und der Vergleichsbeispiele (#3 bis #6).

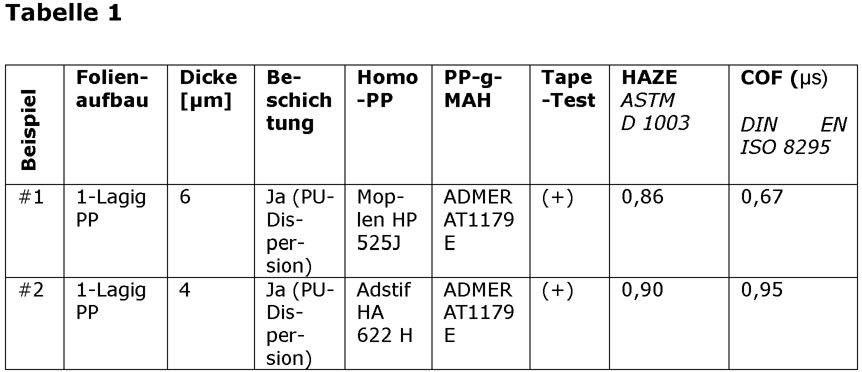

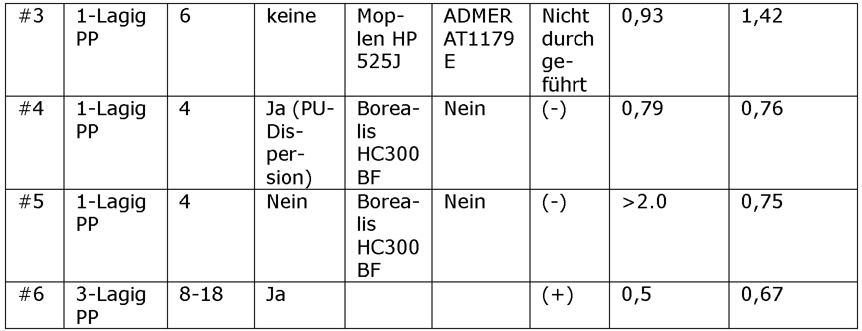

### Vergleichsbeispiel #3

Vergleichsbeispiel #3 basiert auf Beispiel #1. Jedoch wurde keine Beschichtung aufgetragen. Es zeigt sich, dass die Reibwerte deutlich erhöht sind (COF(µs) = 1,42), sodass es zu einem Verblocken kam. Der Vergleich von Beispiel #1 mit Vergleichsbeispiel #3 zeigt zudem, dass die Beschichtung die optischen Eigenschaften nicht beeinträchtigt.

### Vergleichsbeispiel #4

Im Vergleichsbeispiel #4 wurde hochreines Polypropylen (Kondensatorgrade PP-C, Borealis HC300BF) extrudiert. Maleinsäureanhydrid funktionalisiertes Polypropylen wurde nicht beigemischt. Die erhaltene Polypropylen-Lage wurde anschließend wie Beispiel #1 beschichtet. Es zeigt sich, dass die Herstellung dünner Folien möglich ist, jedoch ist die Anhaftung der Beschichtung und etwaiger Metallisierungen nicht ausreichend. Der Tape-Test wurde nicht bestanden.

### Vergleichsbeispiel #5

Im Vergleichsbeispiel #5 wurde hochreines Polypropylen (Kondensatorgrade) extrudiert. Maleinsäureanhydrid funktionalisiertes Polypropylen wurde nicht beigemischt und die Polypropylen-Lage wurde nicht beschichtet. Die erhaltene Folie hatte schlechte optische Eigenschaften (Haze >2) und eine aufgebrachte Metallisierung haftete nur ungenügend.

### Vergleichsbeispiel #6

Gemäß Vergleichsbeispiel #6 wurde eine 3-lagige mehrschichtige Polypropylen-Folie extrudiert. Die erste Schicht umfasst Moplen HP525J sowie Admer AT1179E. Die zweite, unmittelbar darunterliegende Schicht umfasst nur Polypropylen (Moplen HP525J) und die dritte Schicht umfasst Polypropylen (Moplen HP525J) mit einem AB-Masterbatch. Die erhaltene Folie wurde mit einer PU-Dispersion (wie Beispiel #1) beschichtet. In einem ersten Versuch konnte die Foliendicke nicht unter 18 µm eingestellt werden. In einem zweiten Versuch konnten dann 8 µm erreicht werden. Allerdings waren in dem zweiten Versuch die Prozessparameter instabil und der Ausstoß äußerst gering. Dünnere Folien konnten nicht hergestellt werden.

Wie die Beispiele und Vergleichsbeispiele zeigen, ist die erfindungsgemäße Folie wirtschaftlich herstellbar und weist exzellente Eigenschaften (Verblockung, Reibung und Optik, ...) auf und kann so die Nachteile des Standes der Technik zumindest teilweise überwinden.

### Bezugszeichenliste

- 100: Laminatwerkstoff
- 110: Polypropylen-Folie
- 112: Polypropylen-Lage
- 114: Beschichtung (PU)
- 115: Nanopartikel
- 116: Metallisierungslage
- 120: Tragschicht (z.B. Papierstubstrat)
- 1000: Verfahren
- 1100: Extrudieren
- 1150: Verstrecken (Längsrichtung)
- 1200: Beschichten
- 1250: Verstrecken (Längsrichtung und/oder Querrichtung)
- 1300: Oberflächenbehandeln
- 1400: Metallisieren
- 1500: Kaschieren

## Patentansprüche

1. Beschichtete, biaxial orientierte Polypropylen-Folie (110), wobei die
Polypropylen-Folie eine einlagig extrudierte Polypropylen-Folie ist, die eine extrudierte Polypropylen-Lage (112) sowie zumindest eine Beschichtung (114) aufweist, wobei
die extrudierte Polypropylen-Lage (112) ein Homo-Polypropylen und ein Maleinsäureanhydrid funktionalisiertes Polypropylen umfasst, und wobei
die Beschichtung (114) eine Dispersionsbeschichtung ist, die Polyurethan umfasst.

2. Polypropylen-Folie (110) nach Anspruch 1, wobei die Beschichtung (114) eine Dicke im Bereich von 50 nm bis 200 nm, oder im Bereich von 80 nm bis 180 nm, oder im Bereich von 100 nm bis 150 nm aufweist.

3. Polypropylen-Folie (110) nach Anspruch 1 oder 2, wobei die Beschichtung (114) weiterhin Nanopartikel (115) umfasst, wobei
die Nanopartikel (115) einen mittleren Partikeldurchmesser im Bereich von 20 nm bis 150 nm, oder im Bereich von 50 nm bis 120 nm oder im Bereich von 80 nm bis 100 nm aufweisen können.

4. Polypropylen-Folie (110) nach einem der vorstehenden Ansprüche, wobei die extrudierte Polypropylen-Lage (112) aus Homo-Polypropylen und aus Maleinsäureanhydrid funktionalisiertem Polypropylen besteht.

5. Polypropylen-Folie (110) nach einem der vorstehenden Ansprüche, wobei der Anteil an Maleinsäureanhydrid funktionalisiertem Polypropylen in der extrudierten Polypropylen-Lage (112) zumindest 10 Gew.%, oder zumindest 15 Gew.%, oder zumindest 20 Gew.% beträgt.

6. Polypropylen-Folie (110) nach einem der vorstehenden Ansprüche, wobei
die Polypropylen-Folie (110) eine Dichte im Bereich von 0,9 g/cm³ bis 0,95 g/cm³, insbesondere im Bereich von 0,91 g/cm³ bis 0,93 g/cm³ aufweist, und/oder wobei
die Polypropylen-Folie (110) eine Dicke im Bereich von 2 µm bis 10 µm, oder im Bereich von 3 µm bis 7 µm, oder im Bereich von 4 µm bis 6 µm aufweist, und/oderwobei die Dicke der Polypropylen-Folie (110) in einem Toleranzbereich von Soll-Foliendicke ± 0,4 µm, oder in einem Toleranzbereich von Soll-Foliendicke ± 0,25 µm, oder Toleranzbereich von Soll-Foliendicke ± 0,12 µm liegt.

7. Polypropylen-Folie (110) nach einem der vorstehenden Ansprüche, wobei die Beschichtung (114) auf einer wässrigen Dispersionsbeschichtung basiert und/oder wobei
die Beschichtung (114) auf einer ersten Seite der Polypropylen-Lage (112) angeordnet ist, und wobei eine zweite, gegenüberliegende Seite der Polypropylen-Lage (112) nicht beschichtet aber oberflächenbehandelt ist, insbesondere mittels einer Corona- und/oder Plasma-Oberflächenbehandlung.

8. Polypropylen-Folie (110) nach einem der vorstehenden Ansprüche, wobei über der Beschichtung (114) eine Metallisierungslage (116) angeordnet ist, wobei
die Metallisierungslage (116) Aluminium, Zink, Titan, Gold, Silber, Silizium, Kupfer und/oder Chrom, sowie Legierungen und/oder Oxide der vorgenannten Materialien umfassen kann.

9. Laminatwerkstoff (100), insbesondere Lebensmittelverpackungslamiantwerkstoff, umfassend zumindest eine Polypropylen-Folie (110) nach einem der vorstehenden Ansprüche, sowie eine Tragschicht (120), wobei die Polypropylen-Folie (110) auf der Tragschicht (120) angeordnet ist.

10. Laminatwerkstoff (100) nach Anspruch 9, wobei die Tragschicht (120) ein Papiersubstrat umfasst, oder aus Papiersubstrat besteht und/oder wobei der Anteil der Polypropylen-Folie (110) am Laminatwerkstoff (100) höchstens 5 Gew.%, oder höchstens 4 Gew.%, oder höchstens 3 Gew.% beträgt.

11. Verfahren (1000) zur Herstellung einer einlagigen extrudierten Polypropylen-Folie (110) nach einem der Ansprüche 1 bis 8, wobei das Verfahren Folgendes umfasst:
Extrudieren (1100) einer Polypropylen-Lage (112), wobei die extrudiert Polypropylen-Lage (112) ein Homo-Polypropylen und ein Maleinsäureanhydrid funktionalisiertes Polypropylen umfasst;
Beschichten (1200), insbesondere Inline-Beschichten, der extrudiert Polypropylen-Lage (112) mit einer Beschichtung (114), wobei die Beschichtung (114) als wässrige Dispersion aufgetragen wird und Polyurethan umfasst;
Verstrecken (1150; 1250) der Polypropylen-Lage (112), wobei das Verstrecken ein Längsverstrecken und/oder ein Querverstrecken der Polypropylen-Lage (112) umfasst, und wobei
das Verstrecken (1150; 1250) vor und/oder nach dem Beschichten (1200) erfolgt.

12. Verfahren (1000) nach Anspruch 11, wobei
- die hergestellte Polypropylen-Folie (110) eine biaxial orientierte Polypropylen-Folie (110) ist, wobei eine Anlagengeschwindigkeit bei der Herstellung der biaxial orientierten Polypropylen-Folie (110) zumindest 300 m/min, oder zumindest 400 m/min, oder zumindest 500 m/min, oder zumindest 600 m/min, oder zumindest 700 m/min, oder zumindest 800 m/min beträgt, und/oder wobei
- die extrudiert Polypropylen-Lage (112) nach dem Extrudieren (1100) und vor dem Verstrecken (1150) über eine Kühlwalze geführt wird, wobei die Temperatur der Kühlwalze im Bereich von 35°C bis 45°C, oder im Bereich von 38°C bis 42°C liegt, und wobei die extrudierte Polypropylen-Lage (112) optional durch ein Wasserbad geführt wird, wobei das Wasserbad eine Temperatur im Bereich von 20°C bis 35°C, oder im Bereich von 22°C bis 28°C aufweist.

13. Verfahren (1000) nach einem der Ansprüche 11 oder 12, wobei
das Längsverstrecken bei einer Temperatur im Bereich von 90°C bis 120 °C, oder im Bereich von 95°C bis 112 °C erfolgt, und/oder wobei
des Streckverhältnis beim Längsverstrecken im Bereich von 4 bis 6, oder im Bereich von 4,5 bis 5 liegt und/oder wobei
das Querverstrecken bei einer Temperatur im Bereich von 140°C bis 190 °C, oder im Bereich von 150°C bis 185 °C erfolgt, und/oder wobei
des Streckverhältnis beim Querverstrecken, TDO, im Bereich von 4 bis 10, oder im Bereich von 5 bis 9, oder im Bereich von 6 bis 9 liegt.

14. Verfahren (1000) nach einem der Ansprüche 11 bis 13, wobei das Beschichten (1200) nur einseitig auf der Polypropylen-Lage (112) erfolgt, und wobei das Verfahren weiterhin ein
Oberflächenbehandeln (1300) der der Beschichtung gegenüberliegende Seite der Polypropylen-Lage (112) umfasst, wobei das Oberflächenbehandeln insbesondere eine Coronabehandlung und/oder Plasmabehandlung umfasst.

15. Verfahren (1000) nach einem der Ansprüche 11 bis 14, wobei das Verfahren weiterhin zumindest einen der folgenden Schritte umfasst:
Metallisieren (1400) der Beschichtung (114), um eine Metallisierungslage (116) auf der Beschichtung (114) anzuordnen, wobei die Metallisierungslage (116) Aluminium, Zink, Titan, Gold, Silber, Silizium, Kupfer, Chrom sowie Legierungen und/oder Oxide der vorgenannten Materialien umfassen kann, und/oder
Kaschieren (1500) der Polypropylen-Folie (110) auf eine Tragschicht (120), wobei die Tragschicht (120) ein Papiersubstrat umfassen, oder ein Papiersubstrat umfassen kann.
